# EUROPÄISCHE PATENTSCHRIFT

(11) **EP 1 733 263 B1**
(45) Veröffentlichungstag und Bekanntmachung des Hinweises auf die Patenterteilung: **28.01.2009**
(21) Anmeldenummer: 05728627.0
(22) Anmeldetag: 29.03.2005
(51) Int. Cl.: G02B 6/00

(54) **BELEUCHTBARE INFORMATIONSEINHEIT**
ILLUMINABLE INFORMATION UNIT
UNITE D'INFORMATIONS POUVANT ETRE ECLAIREE

(30) Priorität: 29.03.2004 DE 102004015293
(43) Veröffentlichungstag der Anmeldung: 20.12.2006
(73) Patentinhaber: Albis Plastic GmbH, 20531 Hamburg (DE)
(72) Erfinder: FLEHINGHAUS, Michael, 21465 Reinbeck (DE); TEITGE, Andreas, 21079 Hamburg (DE)
(74) Vertreter: Kloiber, Thomas
(86) Internationale Anmeldenummer: PCT/EP2005/003283
(87) Internationale Veröffentlichungsnummer: WO 2005/093477

(56) Entgegenhaltungen:
- EP-A- 0 703 051
- EP-A- 1 174 931
- EP-A- 1 197 765
- EP-A- 1 221 628
- EP-A- 1 315 240
- WO-A-00/29785
- WO-A-01/83255
- WO-A-03/072525
- DE-A- 4 040 203
- DE-A- 10 312 250
- DE-A- 19 947 752
- DE-A1- 3 531 873
- DE-U- 29 815 437
- DE-U- 29 920 334
- DE-U1- 29 622 671
- JP-A- 2000 294 020
- JP-A- 2001 250 410
- US-A- 5 581 683
- US-A- 5 727 866
- US-A- 5 938 324
- US-B1- 6 348 960

## Beschreibung

Die vorliegende Erfindung betrifft eine beleuchtbare Informationseinheit für technische Geräte oder Maschinen, insbesondere eine Armatur für Fahrzeuge.

Derartige Informationseinheiten sind in vielfältigen Ausführungsformen zum Beispiel im Automobilbereich bekannt. Dort kommt es darauf an, eine wachsende Zahl von Daten über den Betriebszustand des Fahrzeuges oder von Bordanlagen durch optische Signalgeber oder ähnliches dem Fahrer darzustellen.

Beispielsweise werden in Form eines Anzeigers Daten über den Einschaltzustand einer Heckscheibenheizung, Information darüber, ob das Anti-Blockier-System, die Sitzheizung oder das ESP aktiv ist, Information über den Schaltzustand diverser Außenbeleuchtungen, beispielsweise Fern- und/oder Abblendlicht oder Nebelscheinwerfer oder Nebelschlußleuchte dargestellt.

Aus Gründen der Sicherheit fordern die Fahrzeughersteller, daß die auf diese Weise dargestellte Information sowohl bei Tageslicht als auch bei Nacht für den Fahrer gut erkennbar ist. Insbesondere besteht zur Gewährleistung der Sicherheit und des Komforts die Forderung, daß die Anzeiger weitestgehend unabhängig vom Blickwinkel bei großer Konturschärfe gut ablesbar sind.

Bei einem bekannten Anzeiger wird beispielsweise eine Leuchtdiode als Lichtquelle verwendet. Das Licht aus dieser Leuchtdiode fällt auf eine Streulinse, welche den Lichtstrahl aufweitet, um die beleuchtete Fläche zu vergrößern und gleichzeitig den Abstrahlwinkel zu vergrößern. Anschließend trifft der vergrößerte Lichtstrahl auf die Innenseite des Gehäuses. Das Gehäuse ist dabei an der Außenseite mit einem lichtundurchlässigen Lack versehen. In dem Lack sind per Laser erzeugte Aussparungen enthalten, welche beispielsweise die Form eines Symbols, etwa für die Heckscheibenheizung oder das ABS-Bremssystem, oder Buchstabenform haben. Durch diese Aussparungen tritt anschließend der aufgeweitete Lichtstrahl, sodaß das gewünschte Symbol oder die gewünschten Buchstaben hell erscheinen. Nachteilig bei dieser Art von Anzeiger ist jedoch, daß zum einen aufgrund der räumlichen Begrenzungen der Optik die Strahlaufweitung durch die Streulinse nur unzureichend möglich ist. Dadurch ergibt sich nachteilig, daß auch der Divergenzwinkel des Strahles, also der Abstrahlwinkel, nur unzureichend vergrößert wird. Hierdurch ergibt sich das Problem, daß sich die Anzeige von Betrachtern nur in einem Blickwinkelbereich, der im wesentlichen parallel zur Abstrahlrichtung der Lichtquelle ist, problemlos erkennen läßt. Außerhalb dieses Blickwinkelbereiches kann die Anzeige nicht abgelesen werden. Dies kann zu Beeinträchtigungen der Sicherheit führen, insbesondere bei Anzeigen von sicherheitsrelevanten Daten wie zum Beispiel dem Einschaltzustand des ESP.

Um das Problem des zu geringen Blickwinkels zu beheben, ist vorgeschlagen worden, den oben beschriebenen Aufbau zu ergänzen durch Hinzufügen einer Streuplatte, welche zwischen das Gehäuse des Anzeigers und die Streulinse plaziert wird. Mit Hilfe dieser Streuplatte wird der durch die Streulinse aufgeweitete Lichtstrahl durch Mehrfachstreuung in der Streuplatte von gerichteter Lichtstrahlung weitestgehend in diffuse Lichtstrahlung umgewandelt. Auf diese Weise kann zwar die gewünschte Erweiterung des Blickwinkels erzielt werden. Allerdings hat dieser Aufbau eine Reihe von Nachteilen. Zum einen sind nachteilig die Entwicklungskosten sehr groß, da beim Design des Anzeigers durch den aufwendigen Aufbau zur Strahlaufweitung Beschränkungen bei der Designfreiheit auferlegt werden. Zum anderen ergibt sich aus der Anzahl der erforderlichen Bauteile eine Mindestbaugröße, welche nicht unterschritten werden kann. Da mehrere Bauteile erforderlich sind, müssen bei der Fertigung und Entwicklung Toleranzen in besonderem Maße beachtet werden, was zu einer weiteren Erhöhung der Herstellkosten führt. Ein weiterer Nachteil der Verwendung einer Kombination aus Streulinse und nachgeschalteter Streuplatte liegt darin, daß in unbeleuchtetem Zustand bei Tageslicht die ausgesparten Symbole oder Buchstaben nicht den gewünschten Kontrast zu der Lackierung aufweise, sodaß sie entweder nicht genügend deutlich wahrnehmbar sind oder ungewünscht so aussehen, als seien sie eingeschaltet, oder ungewünscht so aussehen, als seien sie ausgeschaltet, je nach Farbe des Lackes, obwohl keine Beleuchtung erfolgt.

Aus der DE 29 622 671 ist eine beleuchtbare Informationseinheit bekannt, welche einen diffustransparenten Grundkörper mit einer lichtundurchlässigen Deckschicht mit Aussparungen aufweist.

Aufgabe der vorliegenden Erfindung ist es daher, eine beleuchtbare Informationseinheit für technische Geräte oder Maschinen, insbesondere eine Armatur für Fahrzeuge, anzugeben, welche blickwinkelunabhängig bei Tag und Nacht lesbar ist und zudem besonders kostengünstig herstellbar ist.

Diese Aufgabe wird erfindungsgemäß durch eine beleuchtbare Informationseinheit nach Anspruch 1 gelöst, wobei sichtbare Anzeigeelemente der Informationseinheit aus mindestens einem lichtstreuenden Kunststoffelement bestehen, bei dem transparente Streukörper in eine transparente Kunststoffmasse eingebettet sind.

Hierdurch wird vorteilhaft erreicht, daß die Aufweitung des von der Lichtquelle abgestrahlten Lichtes durch die Streuung in dem Anzeigeelement selber erfolgt. Auf diese Weise ist weder eine Streulinse noch eine separate Streuscheibe erforderlich, wie beim Stand der Technik. Vielmehr ist diese Funktion in dem Material, aus dem das Anzeigeelement besteht, bereits integriert. Durch die Lichtstreuung in dem Anzeigeelement wird daher mit großem Vorteil sichergestellt, daß das Anzeigeelement von beliebigen Blickwinkeln im dem Betrachter zugewandten Halbraum abgelesen werden kann. Das Design der Informationseinheit kann vorteilhaft kostengünstig und flexibel gestaltet werden. Insbesondere sind auch keine Mindestabmessungen zu berücksichtigen. Besonders vorteilhaft ist ein Einsatz einer erfindungsgemäßen Informationseinheit in Kraftfahrzeugen zu Land, Wasser und in der Luft zur Anzeige diverser Daten zu Betrieb oder Innenraumausstattung. Ein Einsatz der erfindungsgemäßen Informationseinheit ist außerdem günstig bei Anzeigefeldern von Anlagen der Unterhaltungselektronik, wie zum Beispiel Fernsehern, Videogeräten oder ähnliches, sowie allgemein allen Haushaltsgeräten.

Ein weiterer Vorteil der erfindungsgemäßen Informationseinheit mit dem streuenden Kunststoffelement ist die besonders gute Erkennbarkeit sowohl bei Tag als auch bei Nacht, auch bei großen Blickwinkeln in Bezug auf die Senkrechte zur Oberfläche.

Gemäß der Erfindung ist die transparente Kunststoffmasse aus der Gruppe der Polycarbonate ausgewählt. Polycarbonate haben den Vorteil, daß sie über besonders günstige Materialeigenschaften für Spritzgieß- und/oder Extrusionsverfahren und alle Sonderverfahren zur thermoplastischen Kunststofformgebung verfügen. Insbesondere die Kerbschlagzähigkeit bei tiefen Temperaturen sowie die hohe Temperaturbeständigkeit sind vorteilhaft. Außerdem haben Polycarbonate eine für Spritzgußverfahren besonders gut geeignete Verarbeitungstemperatur. Die mechanische und thermische Beständigkeit von Polycarbonaten sind insbesondere vorteilhaft bei Verwendung des Werkstoffes für Gehäuseteile von Fahrzeugen zu Land, zu Wasser und in der Luft. Bei der Verwendung von Polycarbonaten als transparente Kunststoffmasse hat sich als besonders vorteilhaft für die Streueigenschaften erwiesen, daß der Gewichtsanteil der eingelagerten transparenten Streukörper 0,0001 bis 10%, vorzugsweise 1% beträgt und daß die Streukörper eine Größe von ca. 0,1µm bis 5µm, vorzugsweise 2,5µm haben. Ferner ist es zur Erreichung einer optimalen Homogenisierung des Lichts bezüglich der Abstrahlwinkel günstig, wenn die Größe der Streukörper eine enge Verteilungsfunktion, zum Beispiel eine Gauß-Verteilung, um eine Größe aufweist. Ferner haben sich Mischungen von Streukörpern, die eine bi- beziehungsweise multimodale enge Verteilungsfunktion, zum Beispiel eine Gauß-Verteilung, aufweisen, als besonders gut geeignet erwiesen. Besonders gute Streueigenschaften erhält man zudem, wenn die Einschlüsse eine im wesentlichen sphärische Form aufweisen. Bei der Beimischung der Streukörper zu dem Polycarbonat zeigt sich überraschend, daß insbesondere die gewünschten mechanischen Eigenschaften des Polycarbonates sowie das bekannte Verarbeitungsverhalten und die Volumen-Schwindung erhalten bleiben. Die mechanischen Eigenschaften des Polycarbonates werden also mit Vorteil nicht negativ beeinflußt durch die Beimischung der Streukörper.

Bei der erfindungsgemäßen Informationseinheit ist das lichtstreuende Kunststoffelement mit einer Abdeckschicht versehen, wobei die Abdeckschicht Aussparungen aufweist, die beispielsweise mittels Laserbearbeitung erzeugbar sind. Hierdurch wird vorteilhaft erreicht, daß das in dem Streukörper gestreute Licht gezielt nur an den Aussparungen aus dem Anzeigeelement austritt, sofern die Abdeckschicht lichtundurchlässig ist. Andererseits ergibt sich bezüglich des Tageslichtdesigns ein vorteilhaft hohes Kontrastverhältnis zu dunklen Symbolen bei der Verwendung von hellen Innenraumfarben. Als Abdeckschicht ist eine Lackierung besonders geeignet. Alternativ lassen sich die genannten vorteilhaften Eigenschaften auch erhalten, wenn das lichtstreuende Kunststoffelement lediglich an flächenmäßig den genannten Aussparungen entsprechenden Bereichen mit der Abdeckschicht versehen ist. Hierdurch wird erreicht, daß das in dem Streukörper gestreute Licht gezielt nur an den Aussparungen nicht aus dem Anzeigeelement austritt. Auf diese Weise lassen sich bezüglich des Kontrastes invertierte Informationen darstellen. Auf diese Weise erscheint das Anzeigelement bei Tageslicht dunkel vor dem hellen Hintergrund der Abdeckschicht beziehungsweise Lackschicht, entsprechend einem vorteilhaft hohen Kontrastwert. Die von der Lichtquelle emittierte Lichtenergie bleibt in der Summe erhalten, ohne absorbiert zu werden und wird lediglich durch die Streuung an den Streukörpern im Innern des Polycarbonates bezüglich der Lichtstrahlungsrichtung in diffuse Lichtstrahlung umgewandelt.

Bei einer alternativen Ausgestaltung der Erfindung weist die Abdeckschicht einen dunklen Farbeindruck auf. Auf diese Weise kann vorteilhaft analog zu den im vorhergehenden Abschnitt beschriebenen Vorgängen ein besonders geringer Kontrast zwischen dem Anzeigeelement und der Abdeckschicht beziehungsweise Lackschicht erzielt werden. Dies führt dazu, daß die Anzeige bei Tageslicht im unbeleuchteten Zustand im wesentlichen gleichmäßig dunkel erscheint und die ausgesparten Symbole und/oder Buchstaben nicht erkennbar sind. Diese werden vorteilhaft erst bei Einschalten der Lichtquelle erkennbar.

Eine besonders kompakte Bauweise ergibt sich, wenn das Kunststoffelement in ein Bedienelement integriert ist. Beispielsweise kann die Informationseinheit als eine Anzeige innerhalb eines Tasters integriert sein und den Schaltzustand dieses Tasters optisch anzeigen.

Eine noch kompaktere Bauweise erhält man, wenn das Kunststoffelement selber bereits als Bedienelement ausgestaltet ist. Auf diese Weise entfällt mit großem Vorteil beispielsweise die Verwendung einer zusätzlichen Streuscheibe, da die Funktionen des Lichtstreuens, des Anzeigens der gewünschten Information sowie die Schalterfunktion des Tasters sämtlich in einem Bauteil vereint werden. Besonders günstig ist es dabei, wenn der Taster aus Polycarbonat besteht, da Polycarbonat bezüglich der Kerbschlagzähigkeit bei tiefen Temperaturen und bezüglich der thermischen Beständigkeit vorteilhaft insbesondere für Anwendungen im Automobilbereich ist.

Eine spezielle Ausgestaltungsform der Erfindung sieht vor, daß die Informationseinheit als Kombinationsinstrument oder Display innerhalb derselben ausgebildet ist. Auf diese Weise wird bei der besonders sicherheitsrelevanten Tachometerinformation sichergestellt, daß diese blickwinkelunabhängig ablesbar ist.

Eine Variante der Erfindung ist dadurch gekennzeichnet, daß das lichtstreuende Kunststoffelement als Lichtverteiler und/oder Lichtleiter innerhalb der Informationseinheit ausgebildet ist. Durch die Verwendung des Kunststoffelements als Lichtleiter lassen sich insbesondere bei der Verwendung von LEDs als Lichtquellen diese zahlenmäßig reduzieren, was vorteilhaft zu einer Reduzierung der Kosten für die Informationseinheit führt. Dabei wird ausgenutzt, daß durch die Streuung eine Homogenisierung des emittierten Lichtes derart erreicht wird, daß die Orte der einzelnen LEDs von außen nicht erkennbar sind, da die Anzeige über die gesamte Fläche gleichmäßig beleuchtet ist. Die durch eine einzelne LED ausgeleuchtete Fläche kann sich aufgrund des lichtstreuenden Kunststoffelementes im wesentlichen über die Gesamtfläche der Anzeige erstrecken; das Licht wird also vorteilhaft über die gesamte Anzeige verteilt. Auf diese Weise können auch mehrere Stellen der Anzeige mit nur einer LED beleuchtet werden. Diese Ausführungsform eignet sich auch als mehrdimensionaler Lichtleiter von einer Lichtquelle ausgehend in beliebige Raumrichtungen.

Bevorzugte Ausführungsformen der Erfindung werden nachfolgend anhand der Zeichnungen näher erläutert.

Die Figuren zeigen im Einzelnen:
- Fig. 1:: erfindungsgemäßer Taster mit intrinsischer Lichtstreueigenschaft und LED
- Fig. 2:: schematische Darstellung der Funktionsweise einer erfindungsgemäßen Anzeigeeinheit
- Fig. 3:: schematische Darstellung zur Veranschaulichung der Lichtleitereigenschaft einer erfindungsgemäßen Anzeigeeinheit
- Fig. 4:: schematische Darstellung eines Anzeigers nach dem Stand der Technik
- Fig.: 5: schematische Darstellung eines Anzeigers nach einem auf aufwendige, kostenintensive Weise verbesserten Stand der Technik
- Fig. 6:: Draufsicht auf einen erfindungsgemäßen mehrdimensionalen Lichtleiter
- Fig. 7:: Seitenansicht des erfindungsgemäßen mehrdimensionalen Lichtleiters aus Fig. 6
- Fig. 8:: Anwendungsbeispiel eines erfindungsgemäßen mehrdimensionalen Lichtleiters

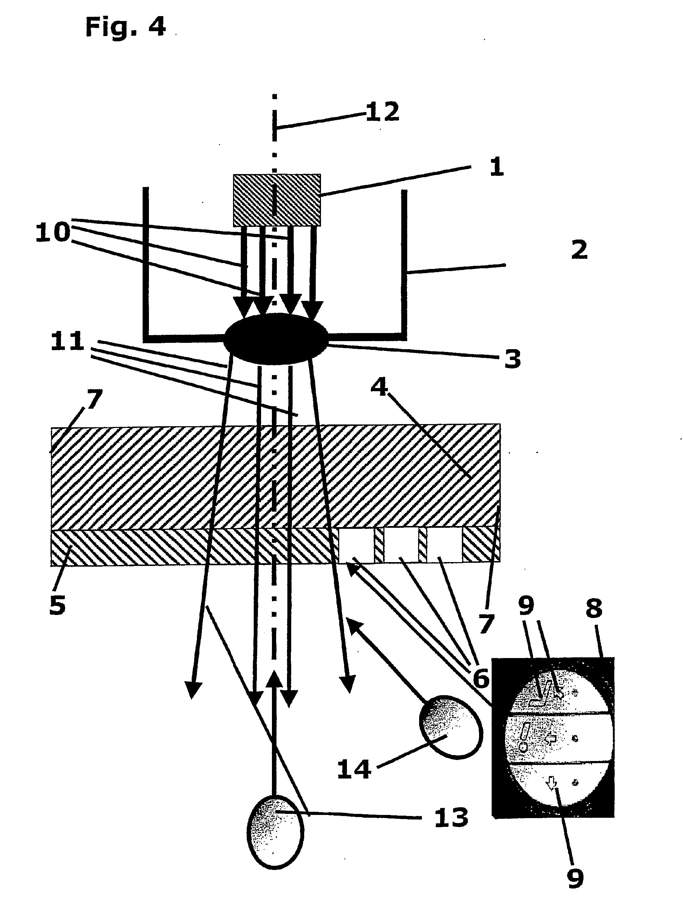

In der Figur 4 ist zunächst schematisch eine dem Stand der Technik entsprechende Anzeigeeinheit dargestellt. Die Anzeigeeinheit besteht aus einer Leuchtdiode 1, einem Leuchtdiodengehäuse 2, einer Streulinse 3 sowie einem Anzeigengehäuse 4. Das Anzeigengehäuse 4 ist mit einer lichtundurchlässigen Lackschicht 5 überzogen. Die lichtundurchlässige Lackschicht 5 hat Aussparungen 6, an welchen jeweils eine Gehäuseaußenseite 7 des Anzeigengehäuses 4 freigelegt ist. Die durch die Aussparungen 6 freigelegten Bereiche der Gehäuseaußenseite 7 bilden in der Draufsicht 8 vor dem Hintergrund der lichtundurchlässigen Lackschicht 5 sichtbare Symbole 9. Wie der Figur 4 weiter zu entnehmen ist, ist die von der Leuchtdiode 1 emittierte Lichtstrahlung 10 im wesentlichen gebündelt und fällt angenähert senkrecht auf die im Leuchtdiodengehäuse 2 angebrachte Streulinse 3 ein. Die durch die Streulinse 3 geringfügig aufgeweitete Lichtstrahlung 11 hat einen etwas größeren Divergenzwinkel als die emittierte Lichtstrahlung 10 und fällt auf das Anzeigengehäuse 4. Durch die durch die Aussparungen 6 in der Lackschicht 5 gebildeten Symbole 9 tritt die geringfügig aufgeweitete Lichtstrahlung aus der Anzeige heraus auf einen in Richtung der optischen Achse 12 blickenden Betrachter 13. Auf einen in einem Winkel von ca. 45° zur optischen Achse 12 blickenden Betrachter 14 fällt die aufgeweitete Lichtstrahlung 11 nicht ein, so daß der Betrachter 14 die durchleuchteten Symbole 9 nicht zu erkennen vermag.

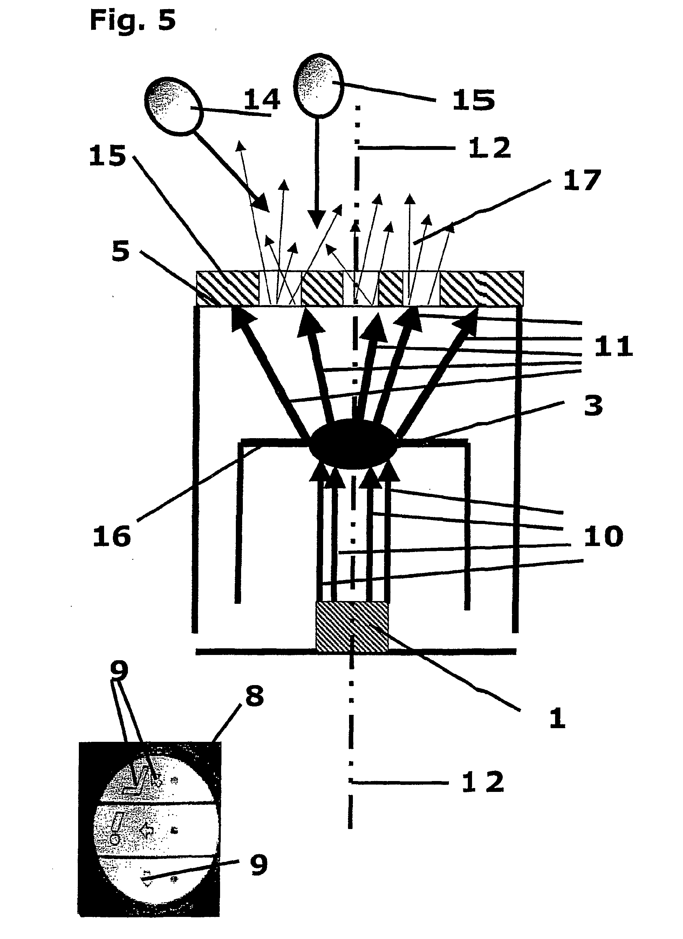

In der Figur 5 ist gemäß einer Variante des Standes der Technik ein Taster 15 mit integrierter Anzeigeeinheit dargestellt. Zu erkennen ist eine Leuchtdiode 1, aus der die emittierte Lichtstrahlung 10 austritt. Die emittierte Lichtstrahlung 10 trifft auf eine Streulinse 3. Die durch die Streulinse 3 aufgeweitete Lichtstrahlung 11 tritt ferner durch eine Tastenstreuscheibe 16, durch welche die aufgeweitete Lichtstrahlung 11 durch Mehrfachstreuung innerhalb der Tastenstreuscheibe 16 in diffuse Lichtstrahlung 17 umgewandelt wird. Die diffuse Lichtstrahlung 17 trifft auf den mit der lichtundurchlässigen Lackschicht 5 versehenen Taster 15. Durch die in der Draufsicht 8 als Symbole 9 erscheinenden Aussparungen 6 in der Lackschicht 5 tritt diffuse Lichtstrahlung 17 sowohl auf einen in Richtung der optischen Achse 12 blickenden Betrachter 13 als auch auf einen in einem Winkel von ca. 45° zur optischen Achse 12 blickenden Betrachter 14. Aufgrund der diffusen Lichtstrahlung 17 können die Symbole 9 in der Draufsicht 8 dabei gleichermaßen von dem in Richtung der optischen Achse 12 blickenden Betrachter 13 und von dem den in einem Winkel von ca. 45° zur optischen Achse 12 blickenden Betrachter 14 erkannt werden. Dazu ist jedoch das Zusammenwirken der Streulinse 3 mit der Tastenstreuscheibe 16 erforderlich, wobei diese Komponenten in einem bestimmten Abstand zueinander angeordnet sein müssen. Hierdurch ist dieser Aufbau sehr aufwendig und kostenintensiv.

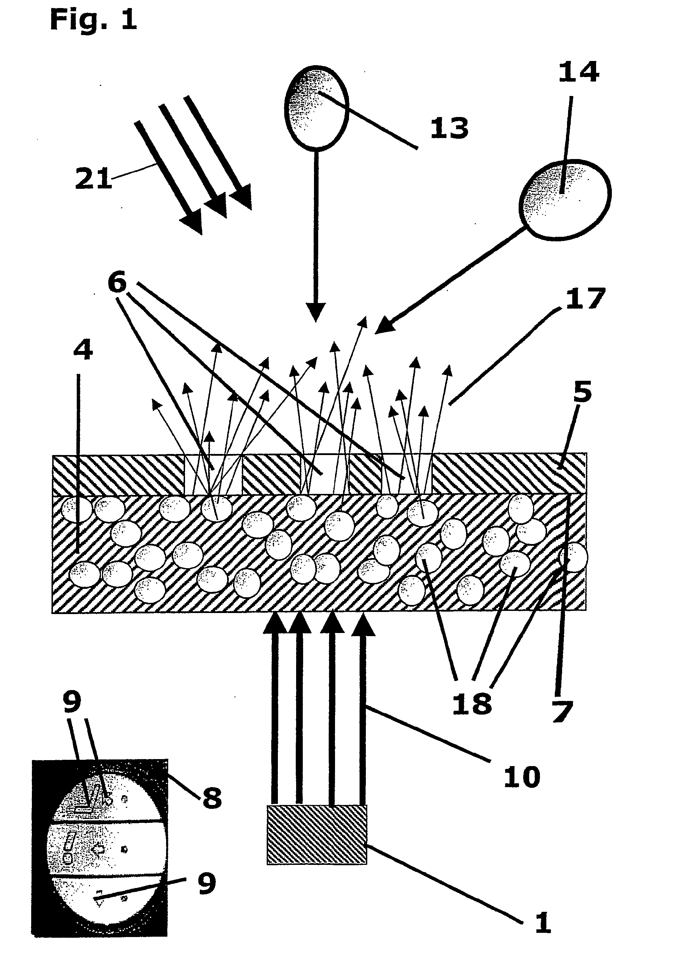

In der Figur 1 ist eine erfindungsgemäße Anzeigeeinheit dargestellt. Zu erkennen ist wiederum die Leuchtdiode 1, welche die gerichtete emittierte Lichtstrahlung 10 emittiert. Die gerichtete emittierte Lichtstrahlung 10 fällt parallel zu der optischen Achse 12 direkt auf das Anzeigengehäuse 4 auf. Das Anzeigengehäuse 4 besteht aus Polycarbonat, in welches die transparenten Streukörper 18 eingebettet sind. Die Gehäuseaußenseite 7 ist mit der lichtundurchlässigen Lackschicht 5 bedeckt, welche eine helle Farbe aufweist und in welcher sich die Aussparungen 6 befinden, welche in der Draufsicht 8 die Symbole 9 bilden. Im Innern des Anzeigengehäuses 4 wird die gerichtete emittierte Lichtstrahlung 10 durch Mehrfachstreuung an den transparenten Streukörpern 18 in diffuse Lichtstrahlung 17 umgewandelt. Die diffuse Lichtstrahlung 17 tritt durch die in der Lackschicht 5 angebrachten Aussparungen 6, welche in der Draufsicht 8 die Symbole 9 bilden, auf einen in Richtung der optischen Achse 12 blickenden Betrachter 13 und auf einen in einem Winkel von ca. 45° zur optischen Achse 12 blickenden Betrachter 14.

Aufgrund diffuser Lichtstrahlung 17 können die Symbole 9 in der Draufsicht 8 dabei vorteilhaft gleichermaßen von dem in Richtung der optischen Achse 12 blickenden Betrachter 13 und von dem den in einem Winkel von ca. 45° zur optischen Achse 12 blickenden Betrachter 14 erkannt werden. Dieser vorteilhafte Effekt wird dabei auf überraschend einfache Weise mit lediglich einem Bauteil erzielt, welches die Funktionen einer Streulinse 3, einer Tastenstreuscheibe 16 sowie eines Anzeigengehäuse 4 in sich erfüllt.

Wenn die Leuchtdiode 1 in Figur 1 nicht eingeschaltet ist, erscheinen in der Draufsicht 8 die durch die in der Lackschicht 5 angebrachten Aussparungen 6 dargestellten Symbole 9 aufgrund des hohen Kontrastverhältnisses im wesentlichen dunkel. Dadurch erscheinen die Symbole 9 in ausgeschaltetem Zustand der Leuchtdiode 1 bei einfallendem Tageslicht 21 in farblichem Kontrast zu der hellen Lackschicht 5.

Hierdurch wird vorteilhaft erreicht, daß die Symbole sowohl von dem in Richtung der optischen Achse 12 blickenden Betrachter 13 als auch von dem den in einem Winkel von ca. 45° zur optischen Achse 12 blickenden Betrachter 14 auch bei Tageslicht gleichermaßen erkannt werden.

Gemäß der Erfindung kann gleichermaßen die Gehäuseaußenseite 7 mit der lichtundurchlässigen Lackschicht 5 bedeckt sein, welche eine **dunkle** Farbe aufweist und in welcher sich die Aussparungen 6 befinden, welche in der Draufsicht 8 die Symbole 9 bilden. Auch in diesem Fall wird die gerichtete emittierte Lichtstrahlung 10 im Innern des Anzeigengehäuses 4 durch Mehrfachstreuung an den transparenten Streukörpern 18 in diffuse Lichtstrahlung 17 umgewandelt. Die diffuse Lichtstrahlung 17 tritt wiederum durch die in der Lackschicht 5 angebrachten Aussparungen 6, welche in der Draufsicht 8 die Symbole 9 bilden, auf einen in Richtung der optischen Achse 12 blickenden Betrachter 13 und auf einen in einem Winkel von ca. 45° zur optischen Achse 12 blickenden Betrachter 14.

Aufgrund diffuser Lichtstrahlung 17 können in diesem Fall einer dunklen Lackschicht 5 die Symbole 9 in der Draufsicht 8 dabei vorteilhaft gleichermaßen von dem in Richtung der optischen Achse 12 blickenden Betrachter 13 und von dem den in einem Winkel von ca. 45° zur optischen Achse 12 blickenden Betrachter 14 erkannt werden.

Wenn hingegen in dem Fall einer dunklen Lackschicht die Leuchtdiode 1 in Figur 1 nicht eingeschaltet ist, sind in der Draufsicht 8 die durch die in der Lackschicht 5 angebrachten Aussparungen 6 dargestellten Symbole 9 aufgrund des geringen Kontrastverhältnisses zwischen der Lackschicht und den nicht durch die Leuchtdiode 1 beleuchteten Aussparungen 6 im wesentlichen nicht erkennbar. Dadurch erscheinen die Symbole 9 in ausgeschaltetem Zustand der Leuchtdiode 1 bei einfallendem Tageslicht 21 also in fast keinem Kontrast zu der dunklen Lackschicht 5. Die Symbole 9 sind daher bei Tageslicht 21 und nicht eingeschalteten Leuchtdioden 1 praktisch nicht zu erkennen.

Durch geeignete Wahl Kombination einer dunklen oder hellen Lackschicht 5 mit ein- oder ausgeschaltetem Zustand der Leuchtdiode 1 können auf diese Weise jeweils zwei zueinander inverse Zustände bei Tag beziehungsweise bei Nacht erreicht werden. Je nachdem, ob zum Beispiel gewünscht ist, daß ein Symbol 9 bei Tageslicht 21 bei ausgeschalteter Leuchtdiode 1 besonders gut oder praktisch gar nicht erkennbar ist, sollte die Lachschicht also dunkel (kleiner Kontrast zwischen Symbol 9 und Lackschicht 5 bei ausgeschalteter Leuchtdiode 1) beziehungsweise hell (großer Kontrast zwischen Symbol 9 und Lackschicht 5 bei ausgeschalteter Leuchtdiode 1) gewählt sein.

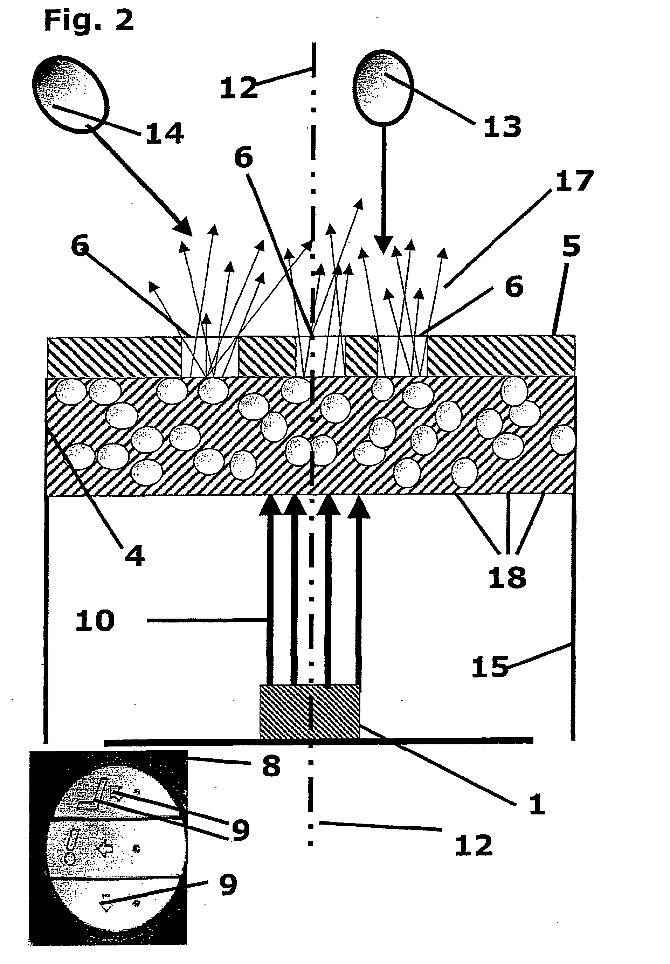

In Figur 2 ist ein Ausführungsbeispiel einer Weiterbildung der Erfindung dargestellt. Wie in der Figur zu erkennen, befindet sich die Leuchtdiode 1 im Innern des Tasters 15 mit integrierter Anzeige. Die Leuchtdiode 1 emittiert die Lichtstrahlung 10. Die emittierte Lichtstrahlung 10 ist im wesentlichen gerichtet und trifft auf die Innenseite des Anzeigengehäuses 4. Das Anzeigengehäuse 4 besteht aus Polycarbonat, in welches die transparenten Streukörper 18 eingebettet sind. Die Gehäuseaußenseite 7 ist mit der lichtundurchlässigen Lackschicht 5 bedeckt, in welcher sich die Aussparungen 6 befinden, welche in der Draufsicht 8 die Symbole 9 bilden. Im Innern des Anzeigengehäuses 4 wird die gerichtete emittierte Lichtstrahlung 10 durch Mehrfachstreuung an den transparenten Streukörpern 18 in diffuse Lichtstrahlung 17 umgewandelt. Die diffuse Lichtstrahlung 17 tritt durch die in der Lackschicht 5 angebrachten Aussparungen 6, welche in der Draufsicht 8 die Symbole 9 bilden, auf den in Richtung der optischen Achse 12 blickenden Betrachter 13 und auf den in einem Winkel von ca. 45° zur optischen Achse 12 blickenden Betrachter 14.

Aufgrund der diffusen Lichtstrahlung 17 können die Symbole 9 in der Draufsicht 8 dabei vorteilhaft gleichermaßen von dem in Richtung der optischen Achse 12 blickenden Betrachter 13 und von dem in einem Winkel von ca. 45° zur optischen Achse 12 blickenden Betrachter 14 erkannt werden. Dabei ist die Anzeigeeinheit 4 derart geformt und angeordnet, daß sie zugleich den Taster 15 selber bildet. Dieser vorteilhafte Effekt wird dabei auf überraschend einfache Weise mit lediglich einem Bauteil erzielt, welches die Funktionen einer Streulinse 3, einer Tastenstreuscheibe 16 sowie eines Anzeigengehäuse 4 und zusätzlich die eines Tasters 15 in sich vereint.

Wenn die Leuchtdiode 1 des in Figur 2 dargestellten Tasters 15 nicht eingeschaltet ist, erscheinen in der Draufsicht 8 die durch die in der Lackschicht 5 angebrachten Aussparungen 6 dargestellten Symbole 9 aufgrund der diffusen Streuung des von außen auftreffenden Tageslichtes 21 im wesentlichen dunkel. Dadurch erscheinen die Symbole 9 in ausgeschaltetem Zustand der Leuchtdiode 1 bei einfallendem Tageslicht 21 in farblichem Kontrast zu der hellen Lackschicht 5.

Hierdurch wird vorteilhaft erreicht, daß die Symbole sowohl von dem in Richtung der optischen Achse 12 blickenden Betrachter 13 als auch von dem den in einem Winkel von ca. 45° zur optischen Achse 12 blickenden Betrachter 14 auch bei Tageslicht gleichermaßen erkannt werden.

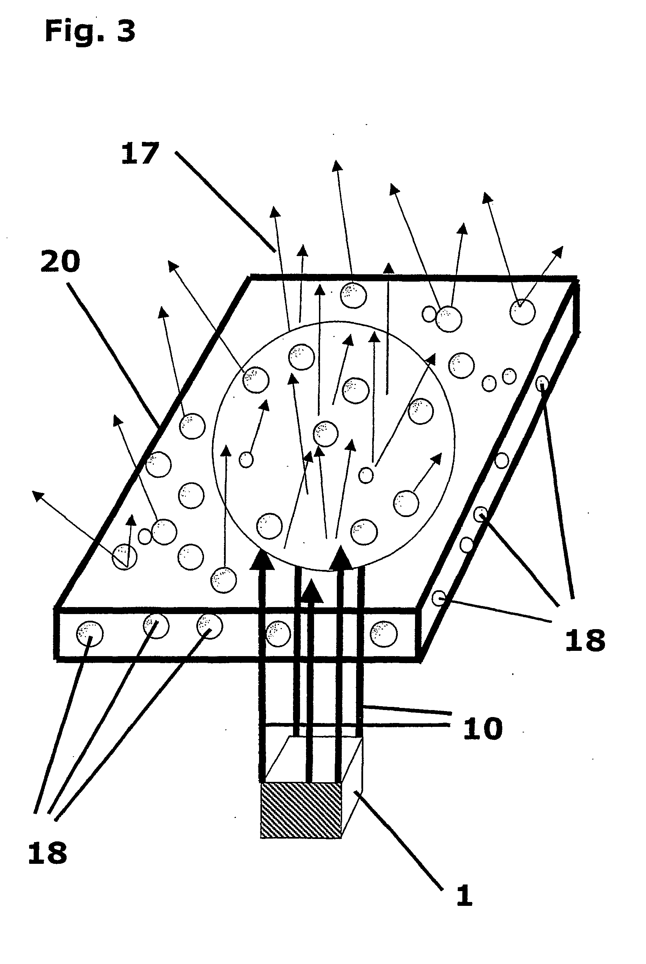

Schließlich ist in Figur 3 ein weiteres vorteilhaftes Ausführungsbeispiel gemäß der vorliegenden Erfindung schematisch dargestellt. Wie in der Figur 3 zu erkennen, trifft die aus der Leuchtdiode 1 emittierte Lichtstrahlung 10, die im wesentlichen gerichtet ist, auf die Platte 20 auf. Die Platte 20 besteht aus Polycarbonat, in welches transparente Streukörper 18 eingebettet sind. Im Innern der Platte 20 wird die gerichtete emittierte Lichtstrahlung 10 durch Mehrfachstreuung an den transparenten Streukörpern 18 in die diffuse Lichtstrahlung 17 umgewandelt. Die diffuse Lichtstrahlung 17 tritt großflächig aus der gesamten Außenfläche der Platte 20 aus. Die diffuse Lichtstrahlung hat dabei eine wesentlich größere Ausdehnung als die Querschnittsfläche der emittierten Lichtstrahlung 10. Auf diese Weise ist durch die Beleuchtung der aus eventuell transparent eingefärbtem Polycarbonat, in welches die eventuell transparent eingefärbten transparenten - Streukörper 18 eingebettet sind, bestehenden Platte 20 mit der kleinflächigen emittierten Lichtstrahlung 10 das Licht über ein Vielfaches des Querschnittes der emittierten Lichtstrahlung ausgedehnt worden.

Die Platte 20 aus eventuell transparent eingefärbtem Polycarbonat verteilt somit das Licht und hat somit als Lichtverteiler agiert. Das Licht einer einzigen Leuchtdiode 1 kann mit dieser Anordnung vorteilhaft überraschend einfach zum Beispiel zur Beleuchtung mehrerer räumlich verteilter Anzeigesymbole 9 verwendet werden. Ferner kann mit dieser Anordnung zum Beispiel auch eine Abdeckung mit in allen drei Raumrichtungen beliebig geformter Oberfläche mit beispielsweise nur einer oder wenigen Leuchtdioden 1 beleuchtet werden. Dies ist besonders interessant für Sicherheitsfunktionen wie beispielsweise einem an einer Autotür angebrachten Warnlicht, mit welchem andere Verkehrsteilnehmer vor der geöffneten Tür gewarnt werden, wobei vorzugsweise der Bedienkomfort für den Fahrzeugführer erhöht wird.

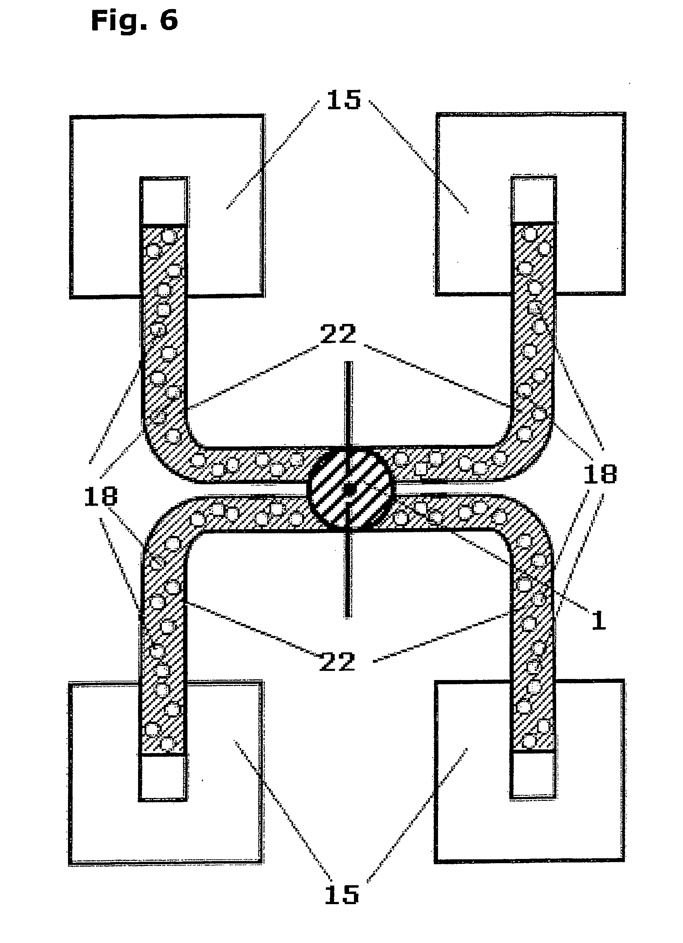

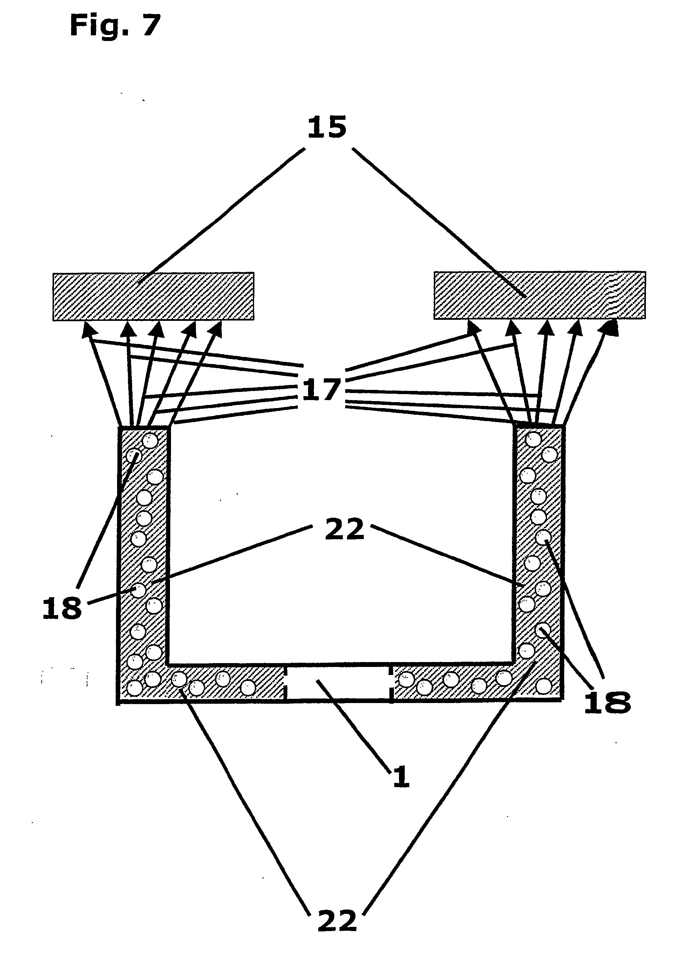

In Fig. 6 und Fig. 7 ist eine Leuchtdiode 1 zu erkennen, welche zur Beleuchtung eines Lichtleiters 22 angeordnet ist. Der Lichtleiter 22 besteht aus eventuell transparent eingefärbtem Polycarbonat, in welches eventuell transparent eingefärbte transparente Streukörper 18 eingelagert sind. Das von der Leuchtdiode 1 emittierte Licht wird durch mehrfache Streuung an den eventuell transparent eingefärbten transparenten Streukörpern 18 innerhalb des aus eventuell transparent eingefärbtem Polycarbonat bestehenden Lichtleiters 22 zu vier Tastern 15 transportiert. An den Enden des Lichtleiters tritt diffuse Lichtstrahlung 17 aus und trifft großflächig auf die Taster 15. Durch diese Anordnung werden vorteilhaft die vier Taster 15 mit ein und derselben Leuchtdiode 1 jeweils großflächig ausgeleuchtet. Die Lichtleitung erfolgt dabei sowohl in horizontaler - wie besonders gut in Fig. 6 zu erkennen - als auch in vertikaler Richtung - wie besonders gut in Fig. 7 zu erkennen. Auf diese Weise ist überraschend ein mehrdimensionaler Lichtleiter vorgeschlagen. mit welchem beispielsweise mehrere räumlich verteilte Anzeigesymbole 9 beleuchtet werden können.

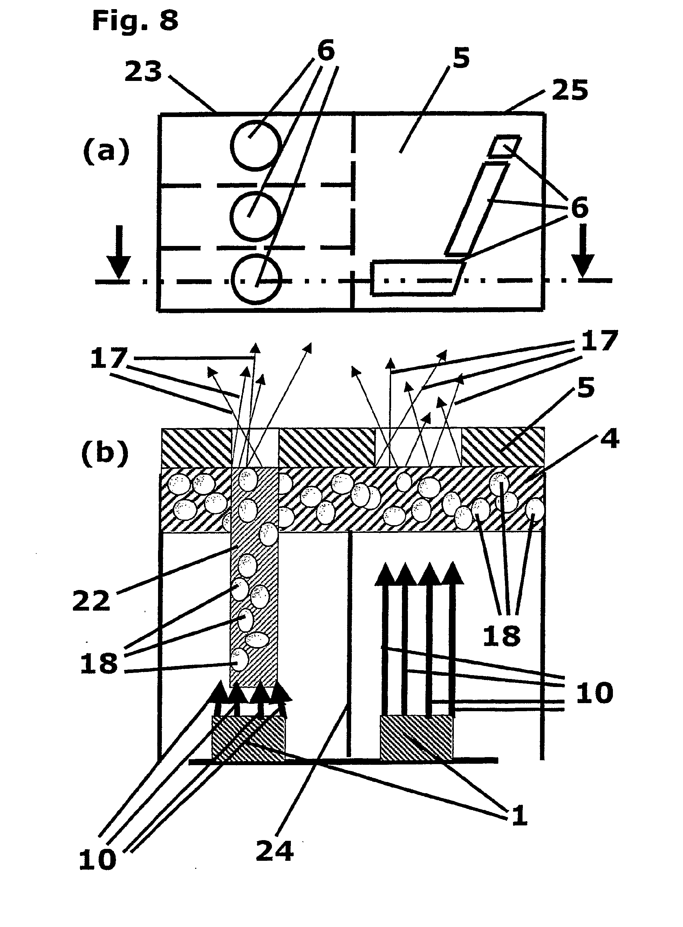

In Fig. 8 ist schließlich eine Ausgestaltung der erfindungsgemäßen Informationseinheit als Statusanzeige für eine Kraftfahrzeug-Sitzheizung schematisch dargestellt. Diese ist in Teil a) der Figur in der Draufsicht zu erkennen. Dabei ist im rechten Abschnitt der Statusanzeige durch Aussparungen 6 in der lichtundurchlässigen Lackschicht 5 das Symbol 9 eines Sitzes dargestellt. In dem linken Abschnitt 23 sind rechteckige Aussparungen 6 als Statusanzeige für die Sitzheizungssegmente zu erkennen. In Teil b) der Figur, welche einen Schnitt durch die Statusanzeige aus Teil a) der Figur ist, sind weiter Leuchtdioden 1 zu erkennen, welche im wesentlichen gerichtete Lichtstrahlung 10 emittieren. Dabei ist jeder Aussparung 6 im linken Segment 23 der Statusanzeige eine eigene Leuchtdiode 1 zugeordnet. Diese sind durch eine lichtundurchlässige Trennwand 24 optisch voneinander getrennt. Die im wesentlichen gerichtete Lichtstrahlung 10 jeder Leuchtdiode tritt in dem linken Abschnitt 23 der Statusanzeige in einen jeder Aussparung 6 des linken Abschnitts 23 der Statusanzeige gesondert zugeordneten Lichtleiter 22 ein. Die Lichtleiter 22 bestehen aus eventuell transparent eingefärbtem Polycarbonat mit eingelagerten, eventuell transparent eingefärbten transparenten Streukörpern 18. Der Ausgang jedes Lichtleiters 22 mündet jeweils in eine der Aussparungen 6 der Statusanzeige für die Sitzheizung. Die Symbole der Statusanzeige werden dabei selektiv von Licht, welches ausschließlich aus der der jeweiligen Aussparung zugeordneten Leuchtdiode 1 emittiert wurde, beleuchtet, da die gerichtete Lichtstrahlung 10 im wesentlichen nur in den dieser Leuchtdiode zugeordneten Lichtleiter 22 eintritt. Durch die innerhalb jedes Lichtleiters 22 an den transparenten Streukörpern 18 erfolgende Mehrfachstreuung der gerichteten Strahlung 10 tritt am oberen Ende jedes Lichtleiters 22 diffuse Strahlung 17 aus. Auf diese Weise kann selektiv jede Aussparung 6 gesondert ein- beziehungsweise ausgeschaltet werden und gleichzeitig ist eine Ausleuchtung der gesamten Fläche jeder Aussparung 6 möglich, obwohl diese Fläche größer ist als die Querschnittsfläche der im wesentlichen gerichteten emittierten Strahlung 10.

Demgegenüber trifft die gerichtete Lichtstrahlung 10 im rechten Abschnitt 25 der Statusanzeige der in diesem Abschnitt angeordneten Leuchtdiode 1 auf das aus eventuell transparent eingefärbtem Polycarbonat mit eingelagerten, eventuell transparent eingefärbten transparenten Streukörpern 18 bestehende Anzeigengehäuse 4. Dort wird es durch Streuung an den transparenten Streukörpern 18 in diffuse Lichtstrahlung 17 umgewandelt. Die diffuse Lichtstrahlung 17 der einen Leuchtdiode 1 leuchtet das im rechten Abschnitt 25 der Statusanzeige durch die Aussparungen 6 in der lichtundurchlässigen Lackschicht 5 dargestellte Symbol 9 eines Sitzes vollständig aus. Im rechten Abschnitt 25 kann somit dank der Erfindung mit einer Leuchtdiode 1 das aus mehreren Aussparungen 6 zusammengesetzte Symbol 9 eines Sitzes vollständig beleuchtet werden.

### BEZUGSZEICHENLISTE

- 1: Leuchtdiode
- 2: Leuchtdiodengehäuse
- 3: Streulinse
- 4: Anzeigengehäuse
- 5: Lackschicht
- 6: Aussparungen
- 7: Gehäuseaußenseite
- 8: Draufsicht
- 9: Symbole
- 10: emittierte Lichtstrahlung
- 11: aufgeweitete Lichtstrahlung
- 12: optische Achse
- 13: Betrachter
- 14: Betrachter
- 15: Taster
- 16: Tastenstreuscheibe
- 17: diffuse Lichtstrahlung
- 18: transparente Streukörper
- 19: Innenseite des Anzeigengehäuses
- 20: Platte
- 21: Tageslicht
- 22: Lichtleiter
- 23: linker Abschnitt
- 24: optische Trennwand
- 25: rechter Abschnitt

## Patentansprüche

1. Beleuchtbare Informationseinheit für technische Geräte oder Maschinen, insbesondere Armatur für Fahrzeuge, wobei sichtbare Anzeigeelemente (4) der Informationseinheit aus mindestens einem lichtstreuenden Kunststoffelement (4) bestehen, bei dem transparente Streukörper (18) in eine transparente Kunststoffmasse (4) eingebettet sind, wobei das lichtstreuende Kunststoffelement (4) mit einer lichtundurchlässigen Abdeckschicht (5) versehen ist, wobei die Abdeckschicht (5) Aussparungen (6) aufweist **dadurch gekennzeichnet dass**, die transparente Kunststoffmasse (4) aus der Gruppe der Polycarbonate und/oder der Gruppe der flammgeschützten und/oder hochtemperaturbeständigen Polycarbonate ausgewählt ist, dass die Größe der Streukörper (18) eine multimodale Verteilungsfunktion aufweist, und dass der Gewichtsanteil der Streukörper 0,0001 bis 10% und deren Größe 0,1 µm bis 5µm beträgt.

2. Beleuchtbare Informationseiriheit nach Anspruch 1, **dadurch gekennzeichnet, dass** die Verteilungsfunktion bimodal ausgestaltet ist.

3. Beleuchtbare Informationseinheit nach einem der vorhergehenden Ansprüche, **dadurch gekennzeichnet, daß** die transparente Kunststoffmasse (4) und/oder die transparenten Streukörper (18) transparent eingefärbt ist/sind.

4. Beleuchtbare Informationseinheit nach Anspruch 3, **dadurch gekennzeichnet, daß** die Abdeckschicht (5) eine helle Farbe aufweist.

5. Beleuchtbare Informationseinheit nach Anspruch 3, **dadurch gekennzeichnet, daß** die Abdeckschicht (5) eine dunkle Farbe aufweist.

6. Beleuchtbare Informationseinheit nach einem der vorhergehenden Ansprüche, **dadurch gekennzeichnet, daß** das lichtstreuende Kunststoffelement (4) in ein Bedienelement (15) integriert ist.

7. Beleuchtbare Informationseinheit nach einem der vorhergehenden Ansprüche, **dadurch gekennzeichnet, daß** das lichtstreuende Kunststoffelement (4) als Bedienelement (15) ausgestaltet ist.

8. Beleuchtbare Informationseinheit nach einem der vorhergehenden Ansprüche, **dadurch gekennzeichnet, daß** die Informationseinheit alskombinationsinstrument und/oder Display innerhalb des Kombinationsinstrumentesausgebildet ist.

9. Beleuchtbare Informationseinheit nach einem der vorhergehenden Ansprüche, **dadurch gekennzeichnet, daß** das lichtstreuende Kunststoffelement (4) als ein- oder mehrdimensionaler Lichtverteiler (20) innerhalb der Informationseinheit ausgebildet ist.

10. Beleuchtbare Informationseinheit nach einem der vorhergehenden Ansprüche, **dadurch gekennzeichnet, daß** sie als eine dreidimensionale Oberflächenstruktur aufweisende Abdeckung ausgebildet ist.

11. Beleuchtbare Informationseinheit nach einem der vorhergehenden Ansprüche, **dadurch gekennzeichnet, daß** sie als Warnlicht, insbesondere für eine geöffnete Kraftfahrzeugtür, ausgebildet ist, wobei vorzugsweise der Bedienkomfort erhöht wird.

## Claims

1. Illuminable information unit for technical devices or machines, in particular vehicle dashboards, visible display elements (4) of the information unit comprising at least one light-diffusing plastic element (4), in which transparent diffusers (18) are embedded in a transparent polymer compound (4), the light-diffusing plastic element (4) being provided with an opaque covering layer (5), the covering layer (5) having clearances (6), **characterized in that** the transparent polymer compound (4) is selected from the group of polycarbonates or the group of flameproofed and/or high-temperature-resistant polycarbonates, **in that** the size of the diffusers (18) has a multimodal distribution function and **in that** the proportion by weight of the diffusers is 0.0001 to 10% and their size is 0.1 µm to 5 µm.

2. Illuminable information unit according to Claim 1, **characterized in that** the distribution function is of a bimodal form.

3. Illuminable information unit according to one of the preceding claims, **characterized in that** the transparent polymer compound (4) and/or the transparent diffusers (18) is/are transparently coloured.

4. Illuminable information unit according to Claim 3, **characterized in that** the covering layer (5) is of a light colour.

5. Illuminable information unit according to Claim 3, **characterized in that** the covering layer (5) is of a dark colour.

6. Illuminable information unit according to one of the preceding claims, **characterized in that** the light-diffusing plastic element (4) is integrated in an operating element (15).

7. Illuminable information unit according to one of the preceding claims, **characterized in that** the light-diffusing plastic element (4) is formed as an operating element (15).

8. Illuminable information unit according to one of the preceding claims, **characterized in that** the information unit is formed as an instrument cluster and/or a display within the instrument cluster.

9. Illuminable information unit according to one of the preceding claims, **characterized in that** the light-diffusing plastic element (4) is formed as a one-dimensional or multi-dimensional light distributor (20) within the information unit.

10. Illuminable information unit according to one of the preceding claims, **characterized in that** it is formed as a covering having a three-dimensional surface structure.

11. Illuminable information unit according to one of the preceding claims, **characterized in that** it is formed as a warning light, in particular for an open door of a motor vehicle, preferably enhancing operating convenience.

## Revendications

1. Unité d'informations pouvant être éclairée pour des appareils ou machines techniques, en particulier une armature pour véhicule, dans laquelle des éléments d'affichage lumineux (4) de l'unité d'informations consistent en au moins un élément synthétique dispersif (4), par lequel des corps dispersifs transparents (18) sont incorporés dans une masse synthétique transparente (4), dans laquelle l'élément synthétique dispersif (4) est pourvu d'une couche de couverture opaque (5), où la couche de couverture (5) comporte des évidements (6), **caractérisée en ce que** la masse synthétique transparente (4) est sélectionnée parmi le groupe des polycarbonates et/ou le groupe des polycarbonates à l'épreuve des flammes et/ou résistants aux hautes températures, **en ce que** la grandeur du corps dispersif (18) présente une fonction spectrale multimodale et **en ce que** la part de poids du corps dispersif est de 0,0001 à 10 % et sa grandeur est de 0,1 µm à 0,5 µm.

2. Unité d'informations pouvant être éclairée selon la revendication 1, **caractérisée en ce que** la fonction spectrale est prédisposée bimodale.

3. Unité d'informations pouvant être éclairée selon l'une des revendications précédentes, **caractérisée en ce que** la masse synthétique transparente (4) et/ou les corps dispersifs transparents (18) est/sont colorés transparents.

4. Unité d'informations pouvant être éclairée selon la revendication 3, **caractérisée en ce que** la couche de couverture (5) présente une couleur claire.

5. Unité d'informations pouvant être éclairée selon la revendication 3, **caractérisée en ce que** la couche de couverture (5) présente une couleur sombre.

6. Unité d'informations pouvant être éclairée selon l'une des revendications précédentes, **caractérisée en ce que** l'élément synthétique dispersif (4) est intégré dans un élément de commande (15).

7. Unité d'informations pouvant être éclairée selon l'une des revendications précédentes, **caractérisée en ce que** l'élément synthétique dispersif (4) est réalisé comme un élément de commande (15).

8. Unité d'informations pouvant être éclairée selon l'une des revendications précédentes, **caractérisée en ce que** l'unité d'informations est formée comme un instrument de combiné et/ou un affichage à l'intérieur de l'instrument combiné.

9. Unité d'informations pouvant être éclairée selon l'une des revendications précédentes, **caractérisée en ce que** l'élément synthétique dispersif (4) est formé comme diffuseur de lumière à une ou plusieurs dimensions (20) à l'intérieur de l'unité d'informations.

10. Unité d'informations pouvant être éclairée selon l'une des revendications précédentes, **caractérisée en ce qu'**elle est formée comme une couverture présentant une structure superficielle à trois dimensions.

11. Unité d'informations pouvant être éclairée selon l'une des revendications précédentes, **caractérisée en ce qu'**elle est formée comme un avertisseur lumineux, en particulier pour une porte ouverte de véhicule automobile.
